Europäisches Patentamt

European Patent Office

Office européen des brevets

(19)

(11) Publication number : **0 509 955 A2**

(12) # EUROPEAN PATENT APPLICATION

(21) Application number : **92810091.6**

(22) Date of filing : **07.02.92**

(51) Int. Cl.⁵ : **A01K 59/04**

(30) Priority : **21.03.91 IT MI910043**

(43) Date of publication of application :
**21.10.92 Bulletin 92/43**

(84) Designated Contracting States :
**AT BE CH DE DK ES FR GB GR LI LU MC NL PT SE**

(71) Applicant : **Manfredini, Mario**
**Via Petrarca 22**
**I-41026 Pavullo nel Frignano, Modena (IT)**

(72) Inventor : **Manfredini, Mario**
**Via Petrarca 22**
**I-41026 Pavullo nel Frignano, Modena (IT)**

(54) Machine for honey separating and relative uncapping device.

(57)    The honey separating machine, made to give a uniform flow of honey from the combs and also a selected harvest of the purer product obtained by centrifugal forces, and that mixed with wax from the capping, that consists in a centrifugal rotator (4) with a vertical axle that has tangential seats , in each of which is inserted the turning axle, like a book-stand, the comb being free to fan out during the centrifugal separation : this seat being movable from the rest position to the upright honey separating position, having a motorized uncapping device to remove the wax from the combs, it is used in establishments that pack honey.

Fig.1

EP 0 509 955 A2

The invention is a honey separater with relative uncapping device, that is a separating machine that uses centrifugal force to extract honey from the cells of the honeycombs: also tools to remove the capping, patent rights for this being already requested. The technique is of a honey separating machine using centrifugal force in which the combs are uncapped by hand using a blade, having being taken out of their respective supers then are put in radius from the vertical shaft of the centrifuge.

However this machine allows the treatment of only a few combs at a time, as the position on a radial frame imposes a precise angle to each comb, and also it is not convenient to exceed in the diameter; another thing is that the different distances of the combs from the rotatory axle of the machine, makes a big difference to the centrifugal force on the honey in the cells, causing an uneven flow of the outcoming honey. Which notably lengthens the time needed for the job. From the patent requested no. 40031 A/90, of this same inventor, not yet on the market,we see a method of honey separating straight from the supers, complete with its comb having uncapped them,and put them into the centrifugal honey separating machine with a horizontal axle, consisting in a prismatic faced rotory with an external border to which the supers are attached for uncapping, that is done with a motorized device, and then they are centrifuged:
in this way, machine and tools allow quicker uncapping and honey separating: though, such a machine does not let you keep separate the purest honey extracted by centrifugation from the cappings,and from that which adheres to them;also,to avoid dripping honey into the wax when uncapping, it is necessary to put a particular screen under the uncapping place to not dirty the next super.

This technique of the past can be very much improved, so as to eliminate the above mentioned faults.

From what we have said we can conclude that we need a honey separating machine that enables us to uncap and separate the honey without allowing the mixing of the purer honey obtained by centrifugal force and that which comes from the capping, also avoiding that during the uncapping,the frames and supers to be treated get dripped on and dirted: this machine must give a uniform outflow of honey from the single honeycombs to assure the maximum productivity,and also be trustworthy and cheap.

This invention resolves this problem by using a honey separating machine in which the supers are put in a crown in relation to the outer edge of the vertical axle spinner: the frame of each honey super is orientated round this axle, in its uncapping position, being slanted up towards the axle, like a book-stand; inside each honey super the single honeycomb having the upper end placed in the groove found on the vertical face of the super parallel and consecutive in tangent with the middle line; being assured that between each bottom edge has been put a disk separating element, this is a great benefit, as it can be moved along the bottom transversal ridge of the comb,the ends of which are held at the sides of this seat; between each pair of separating elements, having been inserted on forsaid axle a hylicoidal spring, the separating elements having a pulley attached, which pulls them towards the fixed central separating element,to fan out the combs;each of the forsaid peripherical seats being well hinged, along its back lower side, to the structure of the rotor: an articulated extendable tie-rod being put between the support shaft of the rotor and the back of the said seat to hold in an upright position the super at the end of the transitional stage of the centrifugation.

The advantages of this invention are: that a uniform flow of honey is obtained from each cell, because of the tangential disposition of the super in relation to the rotation axle: the possibility to extract separately the purer honey that comes out of the cells by centrifugal force, thrown against the outer walls and in the outer ring area at the bottom of the cover, from that which is mixed with the wax of the capping, gathered by falling into the central part of the bottom of the cover itself: this simplifies the job, making it unnecessary to decant the whole mass of honey extracted; this reducing the time needed, eliminating the need for screens and the time needed to put them up, the cleaning and storing; easier uncapping due to the better position of the honey supers, as of a book rest; and so reducing costs.

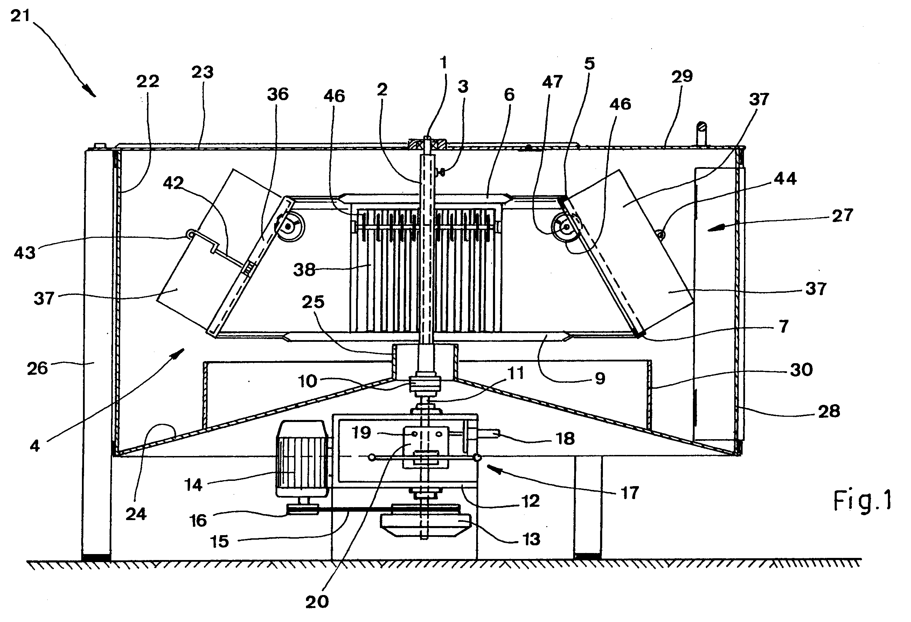

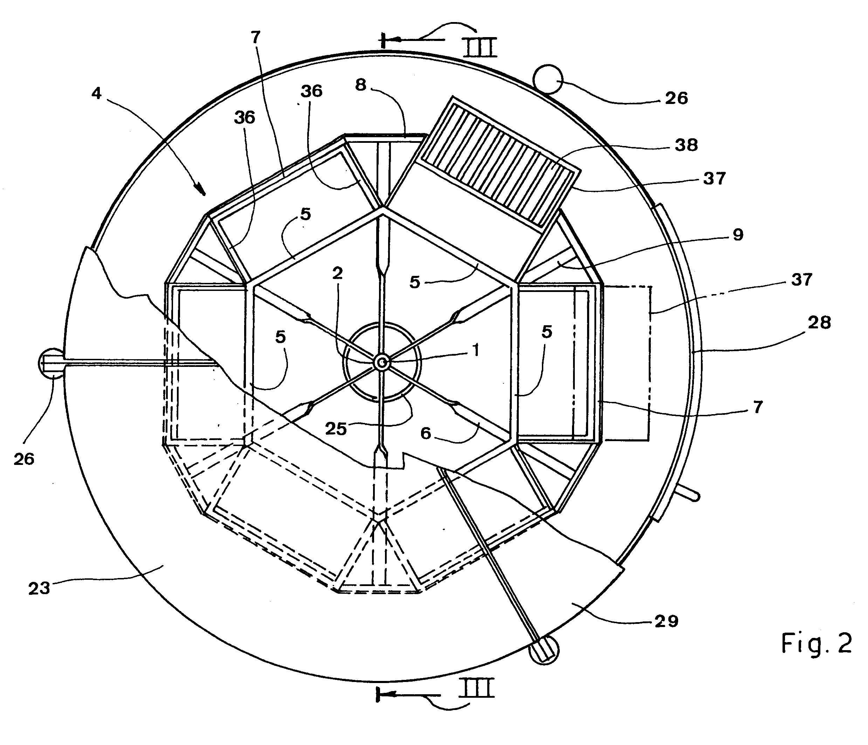

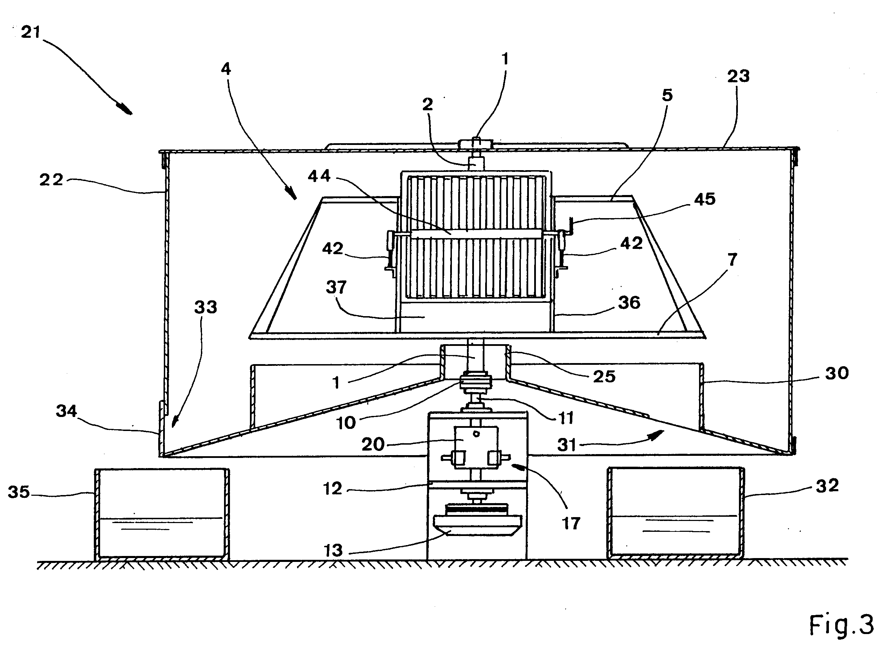

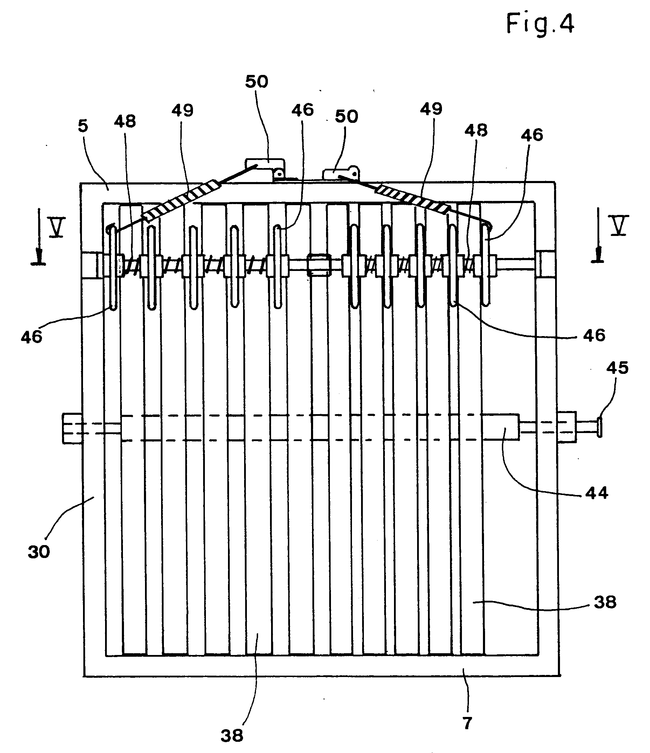

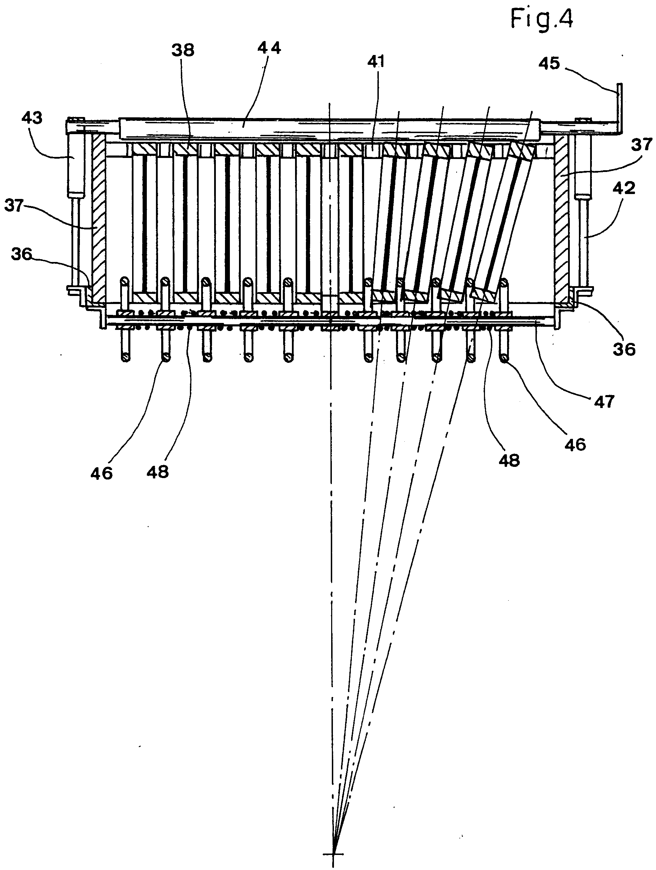

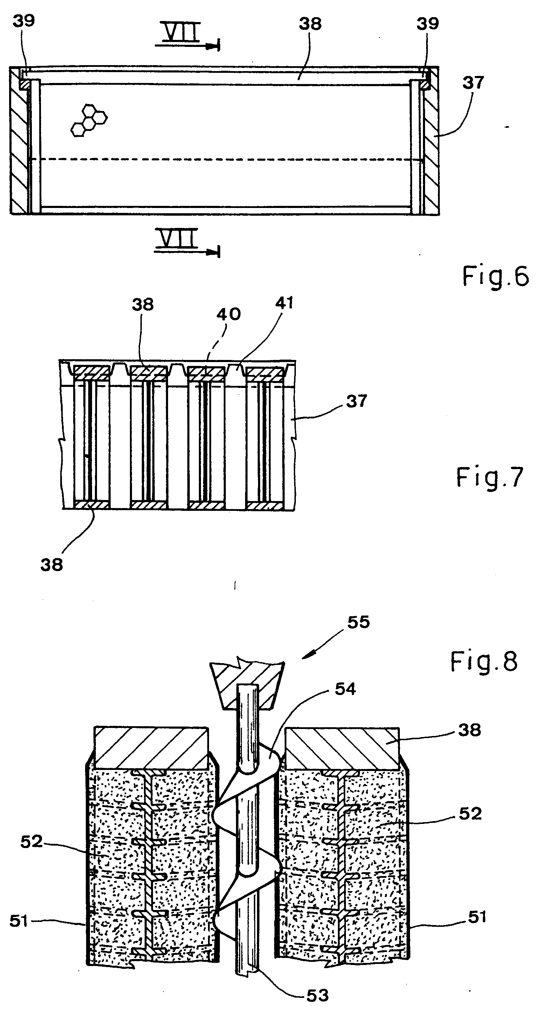

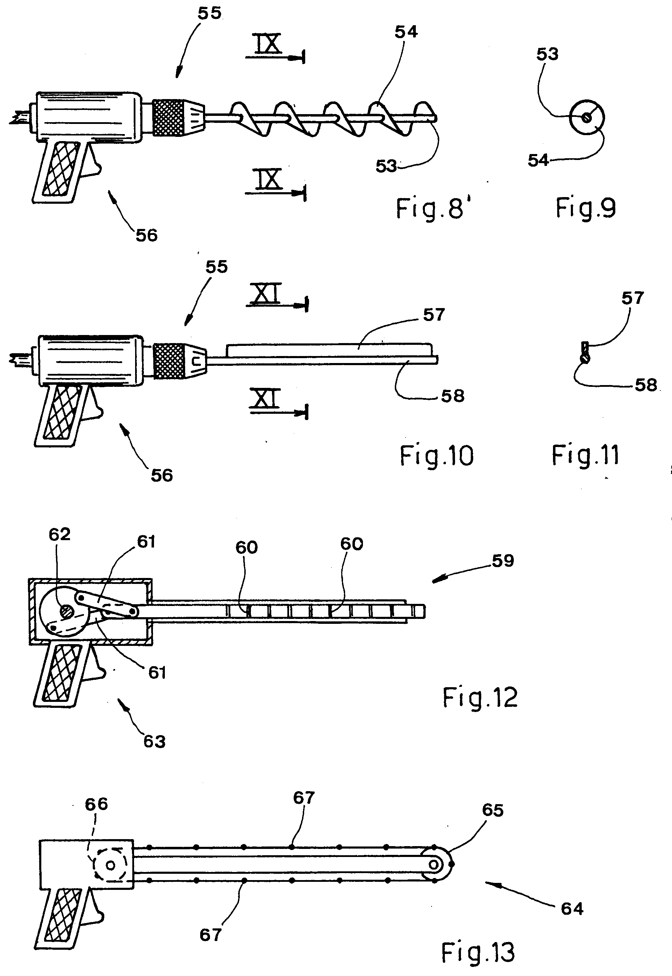

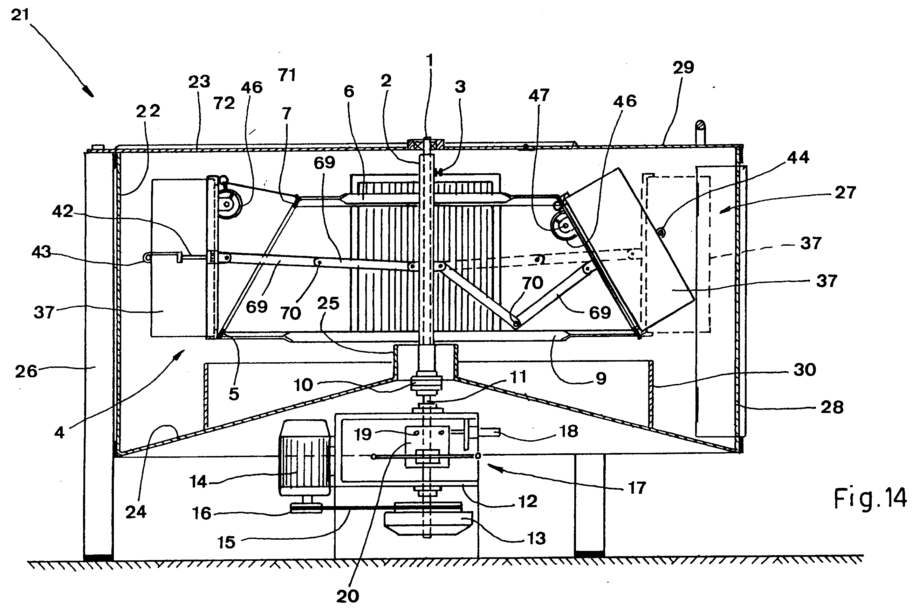

A few ways to put into effect this invention are shown in the eight drawings included, of which ; Figure 1, is a vertical section of the honey separator as of the finding, showing the position for uncapping; Figure 2, is seen from above, a partial section of Figure 1; Figure 3,is the vertical section 111-111 of Figure 2; Figure 4, is the normal view of the axle, of the honey separating position, showing the frame separators for the uncapping operation and the positioning of them, fanned out, for the honey separating: Figure 5, is the section V-V of Figure 4, showing on the right the fanned out position for the following honey separating and, on the left half the position for uncapping; Figure 6, is the partial and unfinished section, VI-VI of Figure 5; Figure 7, is the partial and unfinished section of Figure 6; Figure 8, is the enlarged section of a pair of frames during the uncapping; Figure 8', is a side view of the motorized uncapping tool with a helicoidal crumbling element; Figure 9 is the transversal section IX-IX of Figure 8; Figure 10 is the side view of the radial blade motorized uncapping element; Figure 11 is the transversal XI-XI of Figure 10; Figure 12, is the side view of the alternative duel blade uncapping tool; Figure 13, is the side view of a belt uncapping tool; Figure 14, is a vertical section of the honey separating machine like that in Figure 1, but in a far better version,with the honeysuper that oscillates when reaching the upright position to aid the outflow of the honey in centrifugation.

They show; with 1 the vertical driving shaft of the honey separating machine, above which a hollow shaft 2, has been put, and fastened solidly to the driving shaft with radial screws 3; with 4 a rotator that has an ideal holding surface,in the form of an upright truncated pyramid, in line with the shaft 1, composed of an upper polygonal frame 5, in example hexagonal, having transversal"L" sections, connected to a tube 2,through a series of radial elements 6; with 7, the lower polygonal frame, having straight transversal "L" shaped sections as part of the base of the rotor 4, with development of example dodecagonal and sides of the same length as that of the upper frame 5, alternated with shorter spaces 8, (Figure 2) to connect; with 9 lower radial elements interconnecting the middle sections of said sides 8, of the polygonal frames 7, with the vertical shaft 2; with 10 (again Figure 14) an added transmission of movement between the bottom end of the shaft 1 and top end of the lay shaft 11, sustained in rotation by the base framework 12 ; with 13, an hydraulic joint between the bottom end of the said lay shaft 11 and exit shaft of the electric motor 14, fixed to base framework 12; with 15, a pulley belt fastened at one end round a pulley 16, splined to the forsaid exit shaft, the other end being fastened on the external rotory body of the forsaid hydraulic joint; with 17, a brake, for example brake-shoes, installed in the intermediate part of the lay shaft 11; with 18, a retractable rung for the correct angular positioning of the rotor 4, when uncapping, by putting its internal end into one of the radial holes 19 that are in the drum 20 coaxial on the lay shaft 11; with 21,the cover of the rotor 4, made of a cylindrical side wall 22, closed above with a lid 23, and below with the base 24, having a truncated cone form divergent towards the outside, internally lengthened with a collar tube 25, to allow space for the vertical drive shaft 1; with 26, a triad of supports for the side wall 22; with 27, the uncapping station, which is an opening made in the body of the cylindrical side wall 22, accessible by removing the cylindrical lid 28; with 29 the removable part of the lid 23, of the cover, that concerns an angular sector of about 120% that delimits the area for the uncapping; with 30, an internal cylindrical wall, coming up from the bottom 24 to a hight of some ten centimetres, however remaining, with its upper border, below the level of the base of the rotor 4, to contain the caps that have been removed and the adherent honey; with 31, (Figure 3) the opening to let out the wax mixed with honey fallen during the<uncapping; with 32, with relative collecting and settling tank; with 33, a side opening in the cylindrical wall 22 to collect the centrifuged honey, that has a high level of purity; with 34, a shutter to close the opening 33; with 35, a tank to collect and decant the centrifuged honey; with 36, inclined columns interconnecting the summit of the higher polygonal frame 5, with ends of the corresponding sides of the lower frame 7 so making with them the seat for the honey super 37; with 38, the honeycombs contained on a vertical parallel plain inside the honey super 37 with the middle honeycomb lying on a radial plain; with 39, (Figure 6) the upper ends of each honeycomb, is seated in a groove 40 that is to be found in the upper edges of each of the honey supers 37, between which separating elements have been put 41 to keep apart the honeycombs; with 42 a pair of adjustable braces to hold the honeycomb during the centrifugation, that h as its base fixed to the columns 36 and the top end held with a hook 43, at the end of a shaft 44, made to turn in an eccentric manner compared with said end through external lever 45, for the fixing of the frames to honey super; with 46, a series of ring elements separators of the honeycombs 38, during the uncapping to orientate them during the centrifugation, in between them and to sustained to and move them along runners in the staff 47 fixed at the back top part of the cross piece 36; with 48 (Figure 4) of the coaxle spring to the staff 47, put between the ring separators 46; with 49 a tie-rod for example a spring, going from the last ring of the staff 47, and the middle part of the correspondent side of the higher frame 5,to be moved through the use of a tipping lever 50, the intermediate ring separator being threaded on to the staff 47; with 51, (Figure 8) the formation of caps in wax that close the cells 31 of the honeycombs 52, full of honey; with 53, the shaft of the uncapping tool that has a helicoidal body 54 sticking straight out from the transversing mandrel 55, sustained at the handle 56; with 57, a blade fixed radially to the body of the shaft 58, as an alternative to the spiral tool; with 59, an alternative uncapping tool, consisting in two transversal blades that have a series of teeth 60, actioned by a pair of connecting rods 61, coupled to the crankshaft 62; with 63 the relative handle; with 64, belt uncapping tool 65, the ends of which are wound round a pair of pullies 66 having on the outer edge protrusions or teeth 67, for the removing of the caps; with 68, an oscillating frame hinged at lower edge to the lower framwork 7,resting on the upper frame edge 5 when not in use for uncapping, where the base of each honeysuper 37, can be inserted :to the oscillating frame 68 being fixed to the staff 47 of the separating rings 46,and tie-rod 42 to block the honeycombs in the honey super and the camshaft 44; with 69 a pair of toggle tie-rods, hinged together 70, having each end hinged to the back part of the oscillating frame 68, and to the hollow shaft 2;with 71 a pair of cables,with one end linked to the middle of each side of the superior frame 5, and the end to each ring separater 46, further out;with 72 transmission eyelet of the cable 71, fixed on the back medium part of the oscillating frame 68.

Figure 1 to 13 work in this way: the super 37 fixed in seats formed by the sides of the upper frames 5, lower frames 7, slanting vertical rods 36, with the ring spacing elements 46, fixed between the relative honeycombs 38,in the position for uncapping 21 the wax that closes the cells is removed from each honey super with a motorized uncapping tool which drops the caps into the central lower collecting tank, bordered by the partition 30; then the honeycombs are fixed to the honey supers by cam shaft rotation 43 then put into the correct position by using the tie-rods 49 then the rotator 4, is turned to let out the honey when in centrifugation and is collected into the outer circle of the bottom 24 of the cover; in the case of Figure 14, the honey super 37, is fixed to the oscillating frame 68,during the centrifugation straightened up until they are stopped by the toggle tie-rods 69, the fanning out of the honeycombs is automatic because of the pull of the cables 71, during the cornering of the honey supers, towards the outer side. In practice,the materials, sizes,and finishing details, may be different from those shown, though technically equivalent, without by this evading the jurisdiction of this actual invention.

So is that the form of the separating elements of the honeycombs could be other than disk shaped and the other than expandable tie-rods, the relative command unit.

**Claims**

1. The honey separating machine featuring a centrifugal rotor with a vertical axis to take out honey from the honeycombs while still in the super, characterized by this the rotator (4) has peripherial seats in a crown, in tangent with the foresaid axis, inclining towards the axis, as a book-rest; in each of the said seats the base of a honey super (37) is put of which the honeycombs (38) are lay on a vertical plane, parallel and consecutive, normal in the tangential line relative to the middle, as for the position for the uncapping; the honeycombs can be fanned out when in centrifugation.

2. Machine ,as of claim 1. featuring that each of the foresaid peripheral seats, along its lower side are made to oscillate at an angle from the sloping position towards the rotation axis to an outer vertical one, or almost.

3. Machine, as of claim 1, or 2, featuring, a separator, preferably in a disk form ,is inserted between the lower part of each honeycomb (46) that can run along a transversal staff (47) under the lower side of the said honeycomb, the ends of which are sustained at the edges of this seat (36).

4. Machine as of claim 3, featuring, that the between each pair of said separating elements and inserted on the staff there is a helicoidal spring (48); the end separating elements are attached to a pulley that pulls them towards the central fixed elements, so fanning out the honeycombs.

5. Machine, as of claim 4, featuring,that said pulley is an expandable tie-rod (49,50,) that has one end fixed to the most external separating element,and the other end hinged to the middle point of the body of the tipping lever,that is hinged to the said seat.

6. Machine, as of claim 2,3, featuring, that being between each pair of separating elements inserted a helicoidal spring,the end ones are fastened to a cable (71),that passes through a transmission eyelet (72) fastened to each honey super beneficially passing half way up the same: the other end of this cable being fastened to the framework of the rotator, to automatically fan out the honeycombs during the centrifugation.

7. Machine,as of claim 2, featuring, that on the inner face of each said seat is hinged to outer edge of the blocking element which blocks the angle of the seat , and that as the internal edge fastened to the structure of the rotator.

8. Machine, as of claim 7, featuring, that said blocking element of the angular movement of the seat of the honey super is a toggle tie-rod (69).

9. Motorized uncapping tool, featuring, a handle and an anterior element to take off the caps, featuring ,said anterior element is a shaft (53) with a helicoidal uncapping tool (54).

10. Motorized uncapping element, featuring a handle and an anterior element to take off the caps, featuring that said anterior element is a shaft (58) with radial uncapping blade(57)

11. Motorized uncapping element, featuring a handle and an anterior element to take off caps featuring, that said anterior elements made of a pair of parallel blades (59), having uncapping protrusions (60) with their respective rear ends fastened to a crankshaft (62) by a pair of connecting rods (61).

12. Motorized, uncapping element, featuring a handle and an anterior element for taking off caps, featuring ,the said anterior element is a belt (64), with peripheral uncapping protrusions (67), the ends of which are wound round a pair of pullies (65,66) fastened to the framework of the device.

Fig.1

EP 0 509 955 A2

Fig. 2

Fig.3

Fig.4

Fig.4

Fig.6

Fig.7

Fig.8

55

IX

54

53

53

54

**Fig.8'**     **Fig.9**

56

55

XI

57

58

57

58

56

**Fig.10**     **Fig.11**

62   61    60    60

59

61

63

**Fig.12**

66     67     65

64

67

67

**Fig.13**

Fig.14